# EUROPÄISCHE PATENTSCHRIFT

(11) **EP 0 657 240 B1**
(45) Veröffentlichungstag und Bekanntmachung des Hinweises auf die Patenterteilung: **22.11.2000**
(21) Anmeldenummer: 94114072.5
(22) Anmeldetag: 08.09.1994
(51) Int. Cl.: B23D 79/08

(54) **Werkzeug zur Materialbearbeitung an Werkstücken, insbesondere zum manuellen Entgraten**
Tool for threating workpieces, specially for manual deburring
Outil à usiner des pièces, spécialement à ébarvurer manuellement

(30) Priorität: 13.09.1993 DE 4330879D
(43) Veröffentlichungstag der Anmeldung: 14.06.1995
(73) Patentinhaber: VARGUS Ltd., Nahariyya 22311 (IL)
(72) Erfinder: Hershkovitz, David, Nahariya (IL)
(74) Vertreter: Patentanwälte Ruff, Beier und Partner

(56) Entgegenhaltungen:
- EP-A- 0 077 226
- DE-A- 2 949 656

## Beschreibung

Die Erfindung betrifft ein Werkzeug nach dem Oberbegriff des Anspruches 1. Mit ihm können z.B. feinere Materialbearbeitungen ggf. ohne Zuhilfenahme maschineller bzw. motorischer Antriebskräfte an metallischen Oberflächen bzw. Oberflächen ähnlicher Eigenschaften durchgeführt werden. Solche Bearbeitungen können spanlos und/oder spanabhebend sowie dafür vorgesehen sein, feinere Kerbungen, Nuten, Einebnungen bzw. Glättungen oder Anfasungen bzw. Abrundungen im Bereich von Werkstückkanten herzustellen.

Beim Arbeiten mit solchen Werkzeugen kommt es insbesondere auch auf den Anstellwinkel der in das Werkstück eingreifenden Arbeitsflächen gegenüber dem in Bearbeitungseingriff befindlichen Werkstück an, weshalb vorgesehen ist, hierbei den gegenüber dem übrigen Werkzeug wesentlich kürzeren Arbeitskopf unmittelbar an mindestens zwei im Abstand voneinander liegenden Stellen gegenüber dem Werkstück abzustützen, wobei mindestens zwei dieser Stellen statt quer zur Vorschubrichtung nebeneinander in Vorschubrichtung hintereinander liegen und einen Abstand von etwa 5 bis 30 mm bzw. mindestens 15 und höchstens 20 mm voneinander haben können.

Gemäß der EP-A-0 077 226 ist eine in Vorschubrichtung vor- oder nachlaufende Stützfläche so mit Flanken ausgebildet, daß sie im wesentlichen spielfrei an zwei im Winkel zueinander liegenden und die zu bearbeitende Werkstückkante begrenzenden Flächen des Werkstückes spurtreu geführt wird. Seitwärts gerichtete Querbewegungen um die Werkstückkante sind nicht möglich, ohne die bestimmungsgemäßen Stütz- bzw. Bearbeitungseingriffe beider Arbeitsflächen aufzuheben. Nachteilig ist, daß die jeweilige Arbeitsfläche z.B. bei Verhakungen gegenüber dem Werkstück nur abhebend und nicht seitwärts in eine geringfügig versetzte bzw. verkippte Lage überführt werden kann, um die durch den verhakten Eingriff entstandene Hemmung gegen Bewegungen in Vorschubrichtung zu überwinden.

Außerdem ermöglicht eine solche Ausbildung nicht immer die Herstellung von Flächenprofilen am Werkstück, welche vom Bearbeitungsprofil der Arbeitsfläche abweichen, weil dieses Bearbeitungsprofil quer zur Vorschubrichtung und etwa parallel zur Arbeitsebene nicht verlagert bzw. seine Arbeitsebene gegenüber dem Werkstück in Querrichtung quer zur Vorschubrichtung nicht verkippt werden kann.

Ist die jeweilige Arbeitsfläche, insbesondere eine Stützfläche, durch eine ggf. zweckmäßige Gleitfläche gebildet, so kann sich deren jeweilige Endkante leicht gegenüber dem Werkstück verhaken, und außerdem kann sich eine verhältnismäßig große Reibung zwischen Werkstück und Stützfläche ergeben, welche wie die Bearbeitungsfläche zur Durchführung einer einwandfreien Bearbeitung meist verhältnismäßig stark gegen das Werkstück angepreßt werden muß. Weist der Arbeitskopf bzw. ein die jeweilige Arbeitsfläche bildendes Arbeitsglied, wie ein Werkzeug- oder Stützglied, quer zur Arbeitsebene eine verhältnismäßig große Erstreckung auf, so können sich ungünstige Festigkeitsverhältnisse ergeben, und außerdem kann der Bearbeitungsbereich durch die mit dem Werkzeug arbeitende Person nicht oder nur sehr schwer zur Kontrolle eingesehen werden.

Der Erfindung liegt somit die Aufgabe zugrunde, ein Werkzeug zu schaffen, bei welchem Nachteile bekannter Ausbildungen und/oder der beschriebenen Art vermieden sind und das insbesondere eine leichtgängige Bearbeitung mit verhältnismäßig geringen Kräften in Vorschubrichtung z.B. dadurch ermöglicht, daß seine jeweils in das Werkstück eingreifende Arbeits- bzw. Stützzone im wesentlichen ohne Verlassen des Eingriffes gegenüber dem Werkstück verlagert werden kann.

Erfindungsgemäß sind die Merkmale des Anspruches 1 vorgesehen. Der durch mindestens zwei Stellen definierte Stützbereich des Werkzeuges ist so ausgebildet, daß mindestens ein Stützbereich ohne Abheben oder Absetzen dieses Stützbereiches oder eines weiteren Stützbereiches vom Werkstück seitwärts quer gegenüber dem Werkstück lageverändert werden kann, und zwar bevorzugt stufenlos. Die Lageveränderung kann eine zur Arbeitsebene etwa parallele und zur Vorschubrichtung quer bzw. rechtwinklig liegende Linearbewegung bzw. ebene Drehbewegung und/oder eine Kippbewegung der Arbeitsebene um eine zur Vorschubrichtung etwa parallele Achse sein. Die jeweilige Arbeitsfläche kann dadurch in unterschiedliche Anstell-Lagen gegenüber der Werkstückfläche gebracht werden, so daß z.B. zunächst an einer Werkstückkante eine Kanten-Anfasung hergestellt werden kann, wonach diese Anfasung zu einer etwa viertelkreisförmigen Abrundung oder einer polygonalen Anfasung weiterbearbeitet werden kann.

Ferner können seitwärts aneinanderschließende Abschnitte ein und derselben Arbeitsfläche aufeinanderfolgend in Eingriff mit dem Werkstück gebracht werden, so daß ein eventuell verhakter oder durch Abnutzung stumpf gewordener Bereich zu Gunsten eines geeigneteren Bereiches außer Eingriff gebracht werden kann.

Mindestens eine Arbeitsfläche bzw. mindestens eine Stütz- oder Bearbeitungsfläche bildet jedoch eine zur Vorschubrichtung etwa parallele Spurführung für den Arbeitskopf in dem Sinn, daß sie bei Anpressung gegen das Werkstück dazu neigt, den Arbeitskopf bzw. sich selbst quer zur Vorschubrichtung gegenüber dem Werkstück auszurichten, weil aufgrund der angepreßten Anlage entsprechende Querkräfte hervorgerufen werden. Eine solche Spurfläche kann z.B. durch eine V-förmig und/oder konkav ausgerundet vertiefte Fläche gebildet sein, die jedoch im Verhältnis zu den beiden meist im rechten Winkel zueinander liegenden Gegenflächen des Werkstückes so ausgebildet ist, daß sie bei Anlage an einer dieser Gegenflächen an der anderen Gegenfläche nicht anliegt, sondern von dieser Abstand hat. Hierfür wird der Flankenwinkel der Arbeitsfläche zweckmäßig um mindestens 20 oder höchsten 60°, insbesondere um etwa 40°, größer als der Winkel zwischen den Gegenflächen des Werkstückes gewählt.

Dadurch ist einerseits eine Spurführung und andererseits die seitwärts gerichtete Bewegungsfreiheit der jeweiligen Arbeitsfläche gegenüber dem Werkstück gewährleistet, so daß die jeweilige Arbeitsfläche seitwärts quer zur Vorschubrichtung gegeneinander bzw. gegenüber dem Werkstück versetzte Spur- und Eingriffslagen während des Bearbeitungseingriffes freigibt bzw. zuläßt und diese Eingriffslagen lückenlos aneinander anschließen. Auch kann die jeweils in Eingriff stehende Arbeitsfläche als Drehpunkt für eine weitere Arbeitsfläche dienen, welche um eine zur Arbeitsebene quer liegende Achse dann drehbar ist oder im Abstand voneinanderliegende Arbeitsflächen können gleichzeitig um eine zur Arbeitsebene quer und zwischen diesen Arbeitsflächen liegende Achse gedreht werden.

In Ansicht quer zur Arbeitsebene ist zwischen benachbarten Arbeitsflächen bzw. deren Kontaktflächen mit dem Werkstück ein von solchen für den Eingriff in ein Werkstück vorgesehenen Kontaktflächen freier Raum vorgesehen, wobei der Abstand zwischen diesen Arbeits- bzw. Kontaktflächen oder Kontaktstellen mindestens etwa in der Größenordnung der Arbeitsbreite des Werkzeuges liegt oder gegenüber dem Doppelten davon kleiner ist. Der genannte Abstand ist zweckmäßig mit einer Stelleinrichtung veränderbar, wie auch der Anstellwinkel der jeweiligen Bearbeitungsfläche gegenüber der Arbeitsebene durch eine Stelleinrichtung veränderbar sein kann.

Unabhängig von der beschriebenen Ausbildung ist es vorteilhaft, wenn mindestens eine der Arbeitsflächen im Eingriffszustand mit dem Werkstück in einer oder mehreren quer zueinanderliegenden Richtungen zumindest zwischen Endstellungen frei bewegbar ist und/oder wenn eine dieser Arbeitsflächen in dem genannten Zustand gegenüber dem Grundkörper lagestarr vorgesehen ist. Insbesondere die Stützfläche kann quer zur Vorschubrichtung und/oder etwa parallel zur Arbeitsebene zwischen anschlagbegrenzten Endstellungen hin und hergehend frei bewegbar sein, wodurch die Lage der Bearbeitungsfläche gegenüber dem Werkstück noch besser an die jeweiligen Gegebenheiten angepaßt werden kann.

Die Stützfläche kann aber auch als etwa in der Vorschubrichtung bewegbare Lauffläche, insbesondere als Abrollfläche, ausgebildet sein, so daß eine sehr große Leichtgängigkeit bei der Verlagerung des abgestützten Werkzeuges gegenüber dem Werkstück gewährleistet ist. Die Beweglichkeit erfolgt dabei zweckmäßig insofern selbstanpassend, als die genannte Stützfläche spurzentrierend wirkt und sich von selbst in die günstigste Stellung gegenüber den Gegenflächen des Werkstückes ausrichtet.

Durch eine um eine einzige Achse oder sphärisch gekrümmte Arbeitsfläche ergibt sich in vorteilhafter Weise eine nur linien- bzw. punktförmige Anlage am Werkstück, wodurch auch bei nicht drehbarer Ausbildung eines Stützgliedes eine sehr hohe Leichtgängigkeit gewährleistet und die genannten Kippbewegungen erleichtert werden. Ist die Arbeitsfläche dabei in zwei zueinander rechtwinkligen Ebenen gekrümmt, nämlich z.B. in einer zur Vorschubrichtung und zur Arbeitsebene querliegenden Ebene konkav und in einer dazu bzw. zur Arbeitsebene rechtwinkligen sowie zur Vorschubrichtung etwa parallelen Ebene konvex, so wird die Führung der Stütz- bzw. Lauffläche noch wesentlich weiter verbessert.

Die konkave Krümmung kann wenigstens teilweise auch durch im genannten Querschnitt annähernd geradlinige, stumpfwinklig V-förmig zueinanderliegende Flanken gebildet sein, wie sie sich am Umfang eines Rollenkörpers ergeben, der etwa zwei gleich lange bzw. gleich große kegelstumpfförmige Längsabschnitte aufweist, die mit ihren engeren Enden so aneinanderschließen, daß im tiefsten Bereich der Arbeitsfläche eine Kerbe bzw. eine Freikerbe gebildet ist. Mit dieser Kerbe kann die Stützfläche unmittelbar auf der Werkstückkante laufen, und im Falle einer Freikerbe läuft die Stützfläche beiderseits der Werkstückkante linien- bzw. punktförmig unmittelbar an den Werkstück-Gegenflächen. Der bewegbare Arbeits- bzw. Stützkörper ist zweckmäßig mit einem solchen Lager gelagert, das wie ein Gleitlager einen Lagerspalt bildet, welcher von zwei gegeneinander bewegbaren Flächen begrenzt ist. Der größte Durchmesser des Stützkörpers kann etwa in der Größenordnung seiner Länge liegen, während sein demgegenüber kleinerer kleinster Durchmesser zweckmäßig mindestens etwa die Hälfte davon beträgt.

Es ist aber auch denkbar, eine, zwei oder mehr Arbeitflächen einteilig mit dem Grundkörper auszubilden, insbesondere wenn dieser aus einem gegenüber dem zu bearbeitenden Werkstoff härteren Werkstoff, wie Stahl bzw. gehärtetem Stahl, besteht, so daß die Arbeitsflächen durch dieses Material gebildet sind. Mindestens zwei im Abstand voneinander liegende Arbeitsflächen sind über einen Verbindungsteil des Grundkörpers miteinander verbunden, der für den jeweiligen Arbeitskörper eine Aufnahme bilden kann, falls dieser Arbeitskörper nicht einteilig mit ihm ausgebildet ist. Dieser Verbindungsteil kann auch zweiteilig ausgebildet sein, wobei jeder Abschnitt mindestens eine Arbeitsfläche trägt und die beiden Abschnitte zur getrennten Verstellung der Arbeitsflächen gegeneinander mit mindestens einer Stelleinrichtung gegeneinander verstellbar sind.

Z.B. können die beiden Abschnitte einander in Ansicht quer zur Arbeitsebene bzw. etwa parallel zur Vorschubrichtung übergreifen und im übergreifenden Bereich durch eine festsetzbare Schiebeführung und/oder ein festsetzbares Gelenk bzw. eine Gelenkzone gegeneinander verstellbar sein. Der Verbindungsteil bzw. dessen Abschnitte sind zweckmäßig im wesentlichen flächig bzw. streifen- oder plattenförmig ausgebildet, wobei sie in einer zur Arbeitsebene bzw. zur Längsmittelachse des Grundkörpers etwa parallelen Ebene liegen können, die zweckmäßig mit der Arbeitsebene einen in Vorschubrichtung bzw. zum Halter sich öffnenden spitzen Winkel einschließt. Auf der vom Halter abgekehrten Seite einer Arbeitsfläche ist der Verbindungsteil zweckmäßig in Richtung zur Arbeitsebene z.B. über eine Abkröpfung abgesetzt, so daß sein Abstand von der Arbeitsebene verhältnismäßig klein ist und sich eine hohe Lagestabilität der in diesem Bereich liegenden Arbeitsfläche ergibt.

Der Verbindungsteil kann ggf. einschließlich der Aufnahmen für einen oder mehrere Arbeitskörper einteilig nach Art eines Stanzbiegeteiles aus Blech oder dgl. ausgebildet sein, der keine tiefziehähnliche Verformung, sondern zur spanlosen Formgebung nur einfache Abwinkelungen aufweist, so daß eine sehr einfache Herstellung des dem Arbeitskopf zugehörigen Kopfteiles des Grundkörpers gewährleistet ist.

Unabhängig von der beschriebenen Ausbildung kann es auch zweckmäßig sein, mindestens ein Stütz- bzw. Werkzeugglied nicht quer zur Arbeitsebene stabförmig auszubilden, sondern es etwa parallel zur Arbeitsebene stab- bzw. plattenförmig auszubilden, so daß es mit verhältnismäßig großen Flächen gegen Belastungen quer zur Arbeitsebene an dem Kopfteil des Grundkörpers abgestützt werden kann. Außerdem kann das Werkzeugglied dadurch mit auf Zug belasteten Befestigungsgliedern, z.B. mit Bolzen, gegen den Kopfteil gespannt sein. Durchsetzt das jeweilige Befestigungsglied das Werkzeugglied zweckmäßig teilweise, so liegt sein gegenüber einem Gewindeschaft oder dgl. erweiterter Kopf zweckmäßig entweder im wesentlichen vollständig versenkt innerhalb des Werkzeuggliedes oder innerhalb des Kopfteiles.

Die Befestigungsglieder können etwa parallel zur Arbeitsebene bzw. zur Befestigungsebene des Werkzeuggliedes in einer oder mehreren bis allen Richtungen soviel Spiel gegenüber dem Werkzeugglied bzw. dem Kopfteil haben, daß innerhalb dieses Spieles das Werkzeugglied stufenlos gegenüber dem Kopfteil verstellt und dann festgestellt werden kann. Das jeweilige Befestigungsglied kann aber auch im wesentlichen spielfrei zentrierend wirken, so daß sich eine sehr genaue, vorgegebene Ausrichtung der zugehörigen Arbeitsfläche gegenüber dem Kopfteil des Grundkörpers ergibt. Vorteilhaft steht dieser Kopfteil in Ansicht quer zur Arbeitsebene seitlich nicht oder nur unwesentlich über die Arbeitsbreite der jeweiligen Arbeitsfläche vor, wobei er auch in Vorschubrichtung über das jeweils zugehörige äußerste Arbeitsglied nicht oder nur unwesentlich vorsteht.

In Ansicht auf die Arbeitsebene ist die Erstreckung mindestens eines Arbeitsgliedes in mindestens einem Bereich bis über alle Bereiche quer zur Vorschubrichtung großer als parallel zur Vorschubrichtung, z.B. etwa doppelt so groß, so daß der Arbeitsbereich stets gut von außen eingesehen werden kann. Auch ist die Erstreckung eines Arbeits- bzw. Werkzeuggliedes quer zur Arbeitsebene kleiner als die eines weiteren Arbeits- bzw. Stützgliedes oder als die Höhe bzw. die Dicke des Kopfteiles im Bereich dieser Stützfläche.

Ebenfalls unabhängig von den beschriebenen Ausbildungen kann mindestens ein Arbeitsglied als Wendeglied ausgebildet sein, das nach Verschleiß oder dgl. im Bereich einer Arbeitszone so gegenüber dem Grundkörper verstellt bzw. gewendet werden kann, daß ein weiterer Arbeitsbereich zur Verfügung steht. Im Falle von Schneid- bzw. Schabkanten oder dgl. können dabei zwei solche Kanten etwa parallel zueinander von einer gemeinsamen Fläche begrenzt sein und diese Kanten etwa parallel und/oder quer zur Arbeitsebene in Abstand benachbart zueinander liegen. Das Werkzeugglied kann zwei etwa parallele bzw. ebene Plattenflächen aufweisen, von denen eine als Stützfläche zur Anlage am Grundkörper vorgesehen und in einer Kantenrichtung etwas kleiner als die andere sein kann, so daß sich z.B. ein trapezförmiger Querschnitt des Arbeitsgliedes mit ebenen und/oder gekrümmten Seitenflanken ergibt. Dadurch kann die jeweilige Arbeits- bzw. Eingriffskante im Querschnitt in einfacher Weise spitzwinklig ausgebildet sein.

Ebenfalls unabhängig von der beschriebenen Ausbildung kann eine der Stütz- bzw. Bearbeitungsflächen auch zur spanlosen Bearbeitung vorgesehen und das Werkzeug z.B. nur für eine solche spanlose Bearbeitung ausgebildet sein. Es kann aber auch eine der zerspanenden Bearbeitung voraus und/oder nachlaufende spanlose Bearbeitung vorgesehen sein, insbesondere eine glättende Bearbeitung durch Gleit- oder Rollpressung mit einer entsprechend glatten bzw. harten Bearbeitungsfläche, welche z.B. durch eine Stützfläche gebildet sein kann. Durch die Glättung kann ein verhältnismäßig zerklüfteter Grat soweit vorbearbeitet werden, daß danach die spanabhebende Bearbeitung wesentlich erleichtert ist.

Auch mindestens eine spanabhebende Bearbeitungsfläche kann, wie anhand der Stütz- bzw. Glättfläche beschrieben, profiliert ausgebildet sein, und es können zwei in Vorschubrichtung im Abstand aufeinanderfolgende bzw. bearbeitende spanabhebende Bearbeitungsflächen vorgesehen sein, von denen z.B. die vorauslaufende ggf. gröber oder feiner vorbearbeitet, während die nachlaufende nachbearbeitet. Auch kann das zerstörungsfrei leicht auswechselbare Werkzeugglied gesonderte Arbeitszonen für unterschiedliche Materialien, Werkstückdurchmesser oder dgl. aufweisen, wobei das Werkzeug insbesondere für Bearbeitungsdurchmesser in der Größenordnung zwischen 20 und 100 mm, insbesondere zwischen 40 und 50 mm, geeignet ist.

In jedem Fall ist es zu bevorzugen, wenn in Vorschubrichtung nur zwei punkt- bzw. linienförmige Stütz- bzw. Eingriffsbereiche vorgesehen sind, so daß die Abstützung des Werkzeuges gegenüber dem Werkstück in Ansicht auf die Arbeitsebene zumindest im Bereich der Ecken eines spitzwinkligen Dreieckes erfolgt, dessen Basislinie mit der Schneidkante des Werkzeuggliedes zusammenfällt und dessen in Vorschubrichtung davor liegende Spitze mit einem Stützpunkt der Stützfläche zusammenfällt.

Gegenüber einer auch denkbaren Ausbildung des Werkzeuges zur schiebenden Führung beim Bearbeiten ist eine Ausbildung zum ziehenden Führen zu bevorzugen, weshalb der als Griff ausgebildete Halter in Vorschubrichtung vor dem Arbeitskopf liegt und mit diesem über einen stabförmig dünnen Schaft verbunden ist, welcher zweckmäßig nur bis an das dem Halter zugekehrte Ende des Kopfteiles bzw. höchstens bis an die vorderste Stützfläche oder den vordersten Stützkörper reicht. Durch Schwenken des Halters quer zur Arbeitsebene kann der Kopfteil auf der vordersten Stützfläche abgerollt und dadurch die Eingriffstiefe der nachlaufenden Bearbeitungsfläche verändert werden. Durch Veränderung des Abstandes zwischen der jeweiligen Arbeitsfläche und dem Halter läßt sich das Werkzeug in vorteilhafter Weise auf unterschiedliche Werkstückgrößen bzw. Werkstückdurchmesser einstellen. Eine solche Verstellbarkeit ist z.B. der DE-PS 21 29 768 bzw. der DE-PS 21 66 839 zu entnehmen, auf die Bezug genommen wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: ein erfindungsgemäßes Werkzeug in Seitenansicht,
- Fig. 2: einen Ausschnitt der Fig. 1 in wesentlich vergrößerter Darstellung sowie im Bearbeitungszustand,
- Fig. 3: den Arbeitskopf des Werkzeuges in perspektivischer Darstellung,
- Fig. 4: einen Ausschnitt eines weiteren Werkzeuges in perspektivischer Ansicht auf die Oberseite,
- Fig. 5: das Werkzeug gemäß Fig. 4 in perspektivischer Ansicht auf die Unterseite,
- Fig. 6: eine weitere Ausführungsform eines Arbeitsgliedes in Ansicht auf die Arbeitsseite,
- Fig. 7: das Arbeitsglied gemäß Fig. 6 im Querschnitt und
- Fig. 8: das Arbeitsglied gemäß den Fig. 6 und 7 in einer Ansicht parallel zu einer Arbeits-Rückenfläche.

Das entlang einer Längs-Mittelachse 2 langgestreckt stabförmige Werkzeug 1 weist einen entsprechend stabförmigen Grundkörper 3 auf, der an einem Ende mit einem in der Mittelachse 2 liegenden langgestreckten Griff bzw. Halter 4 zum Umgreifen mit einer Hand sowie zur Übertragung der Vorschubkräfte und der Ausrichtkräfte versehen ist. An ein Ende dieses Halters 4 schließt ein wesentlich dünnerer, durch einen zylindrischen, geradlinigen Stab gebildeter Schaft 5 an, welcher an dem vom Halter 4 abgekehrten Ende einen geringfügig erweiterten Arbeitskopf 6 trägt, der in Längsansicht im wesentlichen innerhalb der Hüllfläche des Griffes 4 liegen kann.

Im Bereich des Arbeitskopfes 6 bildet der Grundkörper 3 einen lagestarr mit dem Schaft 5 verbundenen Kopfteil 7, welcher aus einem Blech oder dgl. mit einer Materialdicke von weniger als 2 mm hergestellt ist und über seine gesamte Erstreckung im wesentlichen konstante Dicke hat. An dem vom Halter 4 bzw. vom Schaft 5 entfernten Ende trägt der Kopfteil 7 an einer, Kantenflächen verbindenden, Plattenfläche ein Arbeitsglied 8 in Form eines Schneidgliedes. Näher bei den Bauteilen 4, 5 bzw. unmittelbar benachbart zum zugehörigen Ende des Schaftes 5 trägt der Kopfteil 7 ein weiteres Arbeitsglied 9 in Form eines Stützgliedes, das vom Arbeitsglied 8 einen größeren Abstand als vom zugehörigen Ende des Schaftes 5 hat, an derselben Seite des Kopfteiles 7 wie das Arbeitsglied 8 liegt und in Richtung dieser Seite über die Mittelachse 2 weiter vorsteht als das Arbeitsglied 8.

Zu dieser Seite steht das Arbeitsglied 9 über die Mittelachse 2 jedoch um weniger als den Durchmesser bzw. Radius des Schaftes 5 vor, so daß es gegenüber der zugehörigen Mantellinie des Halters 4 zurücksteht und in Längsansicht mit dem größten Teil seiner Radialerstreckung deckungsgleich zum Schaft 5 vorgesehen ist. Zum Arbeiten wird das Werkzeug 1 mit dem Arbeitskopf 6 so an die Werkstückkante 12 eines Werkstückes 11 angelegt, daß die beiden Arbeitsglieder 8, 9 im Abstand voneinander in Eingriff mit der Werkstückkante 12 stehen. Verbindet man die dann durch die Arbeitsglieder 8, 9 gebildeten Kontaktstellen mit dem Werkstück, so ergibt sich eine Arbeitsebene 10, die zur Mittelachse 2 in einem sich zum Halter 4 öffnenden Winkel von wenigen Winkelgraden vorgesehen ist, wobei die Arbeitsebene 10 im wesentlichen auf der vom Kopfteil 7 abgekehrten Seite der Mittelachse 2 liegt.

In Längsansicht liegt die quer zur Arbeitsebene 10 gerichtete Höhenerstreckung des Arbeitsgliedes 8 innerhalb der zugehörigen Erstreckung des Schaftes 5 bzw. des Arbeitsgliedes 9, während die parallel zur Arbeitsebene 10 gerichtete Erstreckung des Arbeitsgliedes 8 gegenüber derjenigen des Arbeitsgliedes 9 größer sein kann, jedoch zweckmäßig gegenüber derjenigen des Halters 4 kleiner ist, welcher z.B. einen Durchmesser von etwa 20 mm und eine Länge von etwa 90 mm hat.

Das Arbeitsglied 8 bildet eine den Bauteilen 4, 5, 9 zugekehrte Arbeitsfläche 13, welche sich quer bzw. rechtwinklig zur Mittelachse 2 als langgestreckte Streifenfläche erstreckt und mit ihrer schmaleren Erstreckung quer zur Arbeitsebene 10 steht. Auf der vom Kopfteil 7 abgekehrten bzw. der Arbeitsseite des Werkzeuges und somit der Werkstückkante 12 zugekehrten Seite schließt an die Arbeitsfläche 13 im spitzen Winkel eine weitere Arbeitsfläche 14 an, die ebenfalls quer zur Mittelachse 2 langgestreckt streifenförmig und über die zugehörige Erstreckung des Arbeitsgliedes 8 im wesentlichen durchgehend eben ist. Die Arbeitsflächen 13, 14 bilden eine etwa parallel zur Arbeitsebene 10 und quer bzw. rechtwinklig zur Mittelachse 2 liegende Arbeitskante 15 in Form einer Schneidkante.

Auf der von den Bauteilen 4, 5, 9 abgekehren Seite bildet das Arbeitsglied 8 eine weitere Arbeitsfläche, welche der Arbeitsfläche 13 entspricht und mit der Arbeitsfläche 14 eine weitere Arbeitskante bildet, die durch Wenden des Arbeitsgliedes 8 um eine zur Arbeitsebene 10 quer liegende Achse in Arbeitsstellung gebracht werden kann. Die beiden Arbeitsflächen 13 bzw. die beiden Arbeitskanten 15 können gleich oder hinsichtlich ihrer Winkel oder Profilgebung unterschiedlich ausgebildet und daher für unterschiedliche Einsatzzwecke geeignet sein. Zweckmäßig ist jedoch die jeweilige Arbeitskante 15 über die gesamte Quererstreckung des Arbeitsgliedes 8 durchgehend geradlinig und ununterbrochen linienförmig ausgebildet, so daß sie in jedem Bereich etwa gleiche Wirkung hat.

In Längsansicht haben die Arbeitsflächen 13, 14 bzw. die Arbeitskante 15 die anhand des Arbeitsgliedes 8 beschriebene Erstreckung, wobei ihre Quererstreckung zweckmäßig etwa bei 12 mm liegt. Da die Arbeitskante 15 als Schneidkante vorgesehen ist, bildet die Arbeitsfläche 13 eine Schneidenbrustfläche und die Arbeitsfläche 15 eine Schneidenrückenfläche.

Das Arbeitsglied 9 bildet an der einzigen Arbeitsseite des Werkzeuges eine Arbeitsfläche 16, welche sowohl um eine zur Arbeitsebene 10 etwa parallele sowie zur Mittelachse 2 etwa rechtwinklige Achse 17 gekrümmt als auch in Längsansicht bzw. um eine zur Mittelachse 2 etwa parallele Achse profiliert ist. Legt man auf der Arbeitsseite an die Arbeitsfläche 16 eine zur Mittelachse 2 etwa parallele Tangentialebene, so ergibt sich eine Abstützebene 18, welche im Querschnitt parallel zur Arbeitsebene 10, jedoch in Seitenansicht gegenüber dieser unter einem Winkel von wenigen Winkelgraden liegt, der sich von der Arbeitsfläche 16 zum Arbeitsglied 8 öffnet, wobei die Abstützebene 18 auf der von den Kontaktstellen der Arbeitsglieder 8, 9 bzw. vom Kopfteil 7 abgekehrten Seite der Arbeitsebene 10 liegt. Das Arbeitsglied 9 bzw. die Arbeitfläche 16 ist durch einen einteiligen Rollenkörper gebildet, dessen Drehachse 17 durch die genannte Krümmungsachse gebildet ist.

Die zur Arbeitsseite vollständig freiliegende Arbeitsfläche 14 bzw. die Arbeitskante 15 liegt in einer Anstellebene 19, die zu den Ebenen 10, 18 unter einem spitzen Winkel von wenigen Winkelgraden vorgesehen ist, welcher sich ausgehend von der Arbeitskante 15 weg vom Arbeitsglied öffnet, wobei die Anstellebene 19 auf der der Mittelachse 2 oder dem Kopfteil 7 zugekehrten bzw. von der Ebene 18 abgekehrten Seite der Arbeitsebene 10 liegt. An die Arbeitsebene 10 schließt die Arbeitsfläche 13 unter einem stumpfen Winkel an. Die Arbeitsebene 10 ist z.B. so definiert, daß in ihr die beiden seitlichen Enden der Fläche 13 bzw. 14 oder der Arbeitskante 15 sowie die punktförmige Kontaktstelle der Werkstückkante 12 an der Arbeitsfläche 16 liegen.

Das Werkzeug 1 wird mit den Bauteilen 4, 5, 9 voraus in Vorschubrichtung 20 entlang des Werkstückes 11 bewegt, so daß das Arbeitsglied 8 dem Arbeitsglied 9 nachläuft. Dabei greifen die Arbeitsflächen 13, 14 und die Arbeitskante 15 nur auf einem Teil der Arbeitsbreite des Arbeitsgliedes 8 in die Werkstückkante 12 in einem Eingriffsbereich 21 ein, während die Arbeitsfläche 16 in einem demgegenüber noch schmaleren Eingriffsbereich 22 in das Werkstück 11 eingreift. Der Abstand zwischen den Eingriffsbereichen 21, 22 ist mindestens so groß bzw. größer als der Durchmesser des Schaftes 5, die Höhe des gesamten Arbeitskopfes 6 quer zur Arbeitsebene 10, die Quer-, Längs- und Höhenerstreckung des Arbeitsgliedes 8 bzw. 9 und damit größer als die maximale Arbeitsbreite des Arbeitskopfes 6. Z.B. kann der Abstand etwa zweieinhalb-fach größer als die Erstreckung des Arbeitsgliedes 8 in Vorschubrichtung 20, höchstens doppelt so groß wie die maximale Arbeitsbreite der Arbeitsfläche 16 bzw. etwa um ein Drittel größer als die genannte Arbeitsbreite sein.

Die Arbeitsfläche 16 bildet in Längsansicht eine einspringend profilierte Spur- und Stützfläche dadurch, daß sie durch zwei zur Mitte der Arbeitsbreite im stumpfen Winkel von etwa 130° zueinander liegende Flanken 23 gebildet ist, welche im Querschnitt rechtwinklig zur Arbeitsebene 10 jeweils durchgehend geradlinig sind, im spitzen Winkel zur Arbeitsebene 10 liegen und in der Mitte der Arbeitsbreite im Bereich einer vertieften Kerbe 24 aneinander anschließen.

Seitlich außen geht jede Flanke 23 unmittelbar in eine schmale, zur Arbeitsebene 10 etwa parallele bzw. zu ihr im stumpfen Winkel liegende Bundfläche oder einen zylindrischen Bund 25 über, welcher nach Art einer Anfasung eine Breite von nur etwa einem Millimeter hat und an die zugehörige äußerste End- bzw. Stirnfläche des Arbeitsgliedes 9 anschließt. Die Flächen 13, 14, 16 und die Arbeitskante 15 bzw. die Arbeitsglieder 8, 9 liegen im wesentlichen symmetrisch zu einer Längsmittelebene 26 des Arbeitskopfes 6, welche mit einer Axialebene der Mittelachse 2 zusammenfallen kann, wobei auch der Kopfteil 7 im wesentlichen symmetrisch zu dieser Längsmittelebene 26 ausgebildet ist.

Das Arbeitsglied 9 ist mit einem im wesentlichen als Gehäuse ausgebildeten Lager 27 gelagert, welches im wesentlichen einteilig mit dem Kopfteil 7 ausgebildet ist. Der Kopfteil 7 bildet im Bereich des Lagers 27 eine zur Ebene 10 bzw. 18 etwa parallele und durchgehend im wesentlichen ebene Tragplatte 28, deren von der Arbeitsseite abgekehrte ebene und glattflächige Außenseite die zugehörige äußerste Begrenzung des Arbeitskopfes 6 bildet, welche nur etwa um die Plattendicke oder das Doppelte bzw. Dreifache davon über die zugehörige Seite der Teile 5, 9 vorsteht. An ihrem dem Arbeitsglied 8 zugekehrten Ende geht die Tragplatte 28 über eine zweifach entgegengesetzte etwa rechtwinklig abgewinkelte Abkröpfung 29 in eine in Richtung der Mittelachse 2 wesentlich kürzere Tragplatte 30 über, welche ebenfalls etwa parallel zur Ebene 10, 18 oder 19 liegt und gegenüber der Tragplatte 28 zur Arbeitsebene 10 um mindestens die Materialdicke der Tragplatten 28, 30 bzw. das Doppelte oder Dreifache davon oder etwa um mindestens die zugehörige Höhe des Arbeitsgliedes 8 versetzt ist.

Der Abstand der Tragplatte 30 von der Arbeitsfläche 16 bzw. der Achse 17 ist größer als deren Abstand vom Schaft und vom zugehörigen Ende des Kopfteiles 7. Dieses Ende ist durch eine zur Arbeitsseite quer bzw. schenkelförmig von der Tragplatte 28 abgewinkelte Querwand 31 gebildet, deren über den Umfang des Schaftes 5 nur geringfügig vorstehendes Ende lediglich etwa bis an die Arbeitsebene 10 reicht. Das Schaftende 32 des Schaftes 5 liegt als ringförmige Stirnfläche an der gegenüber ihr größeren ebenen Außenfläche der Querwand 31 ganzflächig an und ist mit einem Befestigungsglied 33 gegen diese Außenfläche sowohl in Längsrichtung als auch in Umfangsrichtung lagestarr gespannt.

Das mit dem Schaft 5 einteilig ausgebildete Befestigungsglied 33 kann nach Art eines Nietkopfes ausgebildet sein, welcher in eine entsprechende Senkbohrung in der Querwand 31 so eingreift, daß er über dessen Innenseite nicht oder nur unwesentlich vorsteht. Die Befestiung zwischen Schaft 5 und Kopfteil 7 wird vor dem Einsetzen des Arbeitsgliedes 9 hergestellt, welches danach diese Befestigung im wesentlichen abdeckt, da sein Umfang nur mit einem geringen Spaltabstand benachbart zur Innenseite der Querwand 31 liegt.

Von den Seiten der Tragplatte 28 und/oder der Querwand 31 sind plattenförmig frei vorstehende, im wesentlichen ebene Lagerschilde 34 abgewinkelt, welche mit geringem Spaltabstand seitlich benachbart zu den Außenseiten des Arbeitsgliedes 9 und parallel zu diesem sowie parallel zueinander liegen. Diese Lagerschilde 34 reichen höchstens bis an die Außenseite der Tragplatte 28 und können gegenüber der seitlichen Außenseite des Arbeitsgliedes 9 schmaler sein, wobei sie ebenfalls nur mit dem genannten geringen Abstand von der Innenseite der Querwand 31 liegen und ihre Außenseiten die seitlich äußersten Begrenzungen des Arbeitskopfes 6 und des Kopfteiles 7 bilden.

Die der Arbeitsebene 10 zugekehrte Kante 35 des jeweiligen Lagerschildes 34 ist annähernd über dessen gesamte Breite konvex bzw. halbkreisförmig abgerundet, wobei ihre Krümmungsachse in Richtung der Mittelachse 2 und/oder in Richtung quer zur Arbeitsebene 10 gegenüber der Achse 17 exzentrisch liegen kann. Z.B. kann die Achse 17 gegenüber der Krümmungsachse näher bei der Arbeitsebene 10 und/oder näher beim Arbeitsglied 8 liegen. Dadurch steht in Ansicht parallel zur Achse 17 das Arbeitsglied 9 zur Arbeitsebene 10, zum Arbeitsglied 8 und zum Schaft 5 über die Tragschilde 34 über einen Bogenwinkel von mehr als 90 bzw. 180° vor. In dieser Ansicht steht das Arbeitsglied 9 bzw. wenigstens ein Teil der Stützfläche 16 in Richtung zur Arbeitsseite auch weiter vor als der Schaft 5 bzw. der gesamte Kopfteil 7 und die Querwand 31. Die beiden Lagerschilde 34 sind von fluchtenden Bohrungen durchsetzt, in welche mit Pressung eine z.B. durch einen rohrförmigen Hohlbolzen gebildete Lagerachse festsitzend eingesetzt ist, die eine Bohrung des hülsenförmigen Arbeitsgliedes 9 durchsetzt. Das auf dem Lagerdorn gleitend drehbar gelagerte Arbeitsglied 9 hat in Richtung der Achse 17 zwischen den Lagerschildern 34 anschlagbegrenztes gleitendes Lagerspiel.

Dieses Lagerspiel ist wesentlich kleiner als die Arbeitsbreite der Arbeitsglieder 8, 9 bzw. die Hälfte oder ein Zehntel dieser Arbeitsbreite und kann in der Größenordnung von etwa 1 mm liegen, so daß das Arbeitsglied 8 ohne Lageänderung des Arbeitsgliedes 9 bzw. des Winkels der Mittelachse 2 gegenüber dem Werkstück 11 seitwärts gegenüber der Werkstückkante 12 verschoben werden kann.

Das Arbeitsglied 8 ist mit seiner von der Arbeitsfläche 14 abgekehrten, zu dieser parallelen und durchgehend ebenen Seite, die eine Spann- und Befestigungsfläche 36 bildet, an der Innenseite der Tragplatte 30 mit einer Befestigungseinrichtung befestigt, die ein zerstörungsfreies Lösen und Auswechseln des Arbeitsgliedes 8 ermöglicht. Außer im Bereich dieser Befestigungsfläche 36 steht das Arbeitsglied 8 in keiner weiteren Berührung mit dem Kopfteil 7. Zur Befestigung sind zwei in Querrichtung im Abstand voneiannder und von den seitlichen Begrenzungsflächen des Arbeitsgliedes 8 liegende Befestigungsglieder 37 in Form von Spannschrauben vorgesehen, welche das Arbeitsglied 8 im Bereich von über den Umfang vollständig geschlossenen Durchgangsbohrungen durchsetzen. Der mit einem Außengewinde versehene Schaft 38 des jeweiligen Befestigungsgliedes 37 greift in eine als Durchgangsbohrung ausgebildete Gewindebohrung des Tragteiles 30 ein und kann mit einem gewindefreien Zentrierabschnitt im wesentlichen radialspielfrei in einen entsprechenden Bohrungsabschnitt des Arbeitsgliedes 8 eingreifen, so daß dieses genau gegenüber dem Kopfteil 7 bzw. den Tragteilen 28, 30 ausgerichtet ist.

Der gegenüber dem Schaft 38 im Durchmesser erweiterte Kopf 39 des Befestigungsgliedes 37 greift in eine in der Arbeitsfläche 14 vorgesehene Senkbohrung des Arbeitsgliedes 8 ein und ist an dieser Seite mit einem Betätigungsglied, wie einem Innensechskant, versehen, so daß die Befestigung des Arbeitsgliedes 8 von dieser Seite her jederzeit gelöst bzw. nachgespannt werden kann.

Die Arbeitsbreite 40 des Arbeitsgliedes 8 reicht über dessen gesamte Quererstreckung und im wesentlichen bis an die Seitenkanten 41 der Tragteile 30, 28, 31, die jeweils durchgehend in einer Ebene vorgesehen sein können, über welche nur der jeweilige Lagerschild 34 vorsteht. Dadurch schließt die jeweilige seitliche Endfläche 42 des in Querrichtung langgestreckt stabförmigen Arbeitsgliedes 8 im wesentlichen bündig mit der zugehörigen seitlichen Kantenfläche 41 ab. Die freie Endkantenfläche 43 des Tragteiles 30 kann ebenfalls annähernd bündig mit der zugehörigen Begrenzungskante der Befestigungsfläche 36 abschließen bzw. gegenüber dieser geringfügig soweit vorstehen, wie die nicht im Einsatz befindliche Arbeitskante 15 vorsteht, die dann etwa in der Ebene dieser Endkantenfläche 43 liegt. Die der Befestigungsfläche 36 zugehörige Anlage- und Spannfläche 44 des Tragteiles 30 ist durchgehend eben, liegt parallel zur Ebene 19 und ist von den Gewindebohrungen durchsetzt.

Zur Veränderung des Verhältnisses der Abstände einerseits zwischen den Eingriffsbereichen 21, 22 und andererseits zwischen dem Eingriffsbereich 22 und dem durch den Halter 4 gegebenen Haltebereich ist eine Stelleinrichtung 45 vorgesehen, welche eine teleskopartige Verschiebung des Schaftes 5 im Halter 4 erlaubt. Ein ringförmig im Bereich des Austrittes des Schaftes 5 am zugehörigen Ende des Halters 4 liegendes Feststellglied ist gleichzeitig als Handhabe 46 ausgebildet, welche durch axiale Verschiebung in Richtung zum freien Ende des Halters 4 die in Längsrichtung und in Umfangsrichtung lagestarre Sperrung des Schaftes 5 gegenüber dem Halter 4 löst und bei Freigabe unter Federkraft in Richtung zur Sperrstellung zurückkehrt.

Der Schaft 5 weist an seiner von der Arbeitsseite abgekehrten Umfangsseite eine versenkte Zahnung 47 auf, welche durch in Längsrichtung des Schaftes 5 hintereinanderliegende Vertiefungen gebildet ist, in die ein Sperrglied, z.B. eine Kugel, formschlüssig einrasten kann. Dieses Sperrglied wird durch die axial federbelastete Handhabe 46 formschlüssig radial nach innen in die jeweilige Lücke der Zahnung 47 gepreßt. Bei gelöster Sperreinrichtung kann der Schaft 5 mit dem Arbeitskopf 6 vollständig aus dem Halter 4 herausgezogen und gegen einen anderen ausgewechselt werden.

Beim Arbeiten mit dem Werkzeug 1 werden die Arbeitskante 15 und die Arbeitsfläche 16 an der Werkstückkante 12 entlanglaufend in Vorschubrichtung 20 geführt, wobei die Arbeitsfläche 16 vorauslaufend glättend und spurführend wirken kann, während die Arbeitskante 15 einen feinen Span abschält. Ohne Absetzen der Arbeitsglieder 8, 9 von der Werkstückkante 12 und ohne die spurhaltende Wirkung des Arbeitsgliedes 9 aufzuheben, kann dabei das Arbeitsglied 8 gegenüber der Werkstückkante 12 seitwärts so gegenüber der Werkstückkante 12 verlagert werden, daß jeder beliebige Bereich seiner Arbeitszone bzw. Arbeitsbreite 40 oder seiner Arbeitskante 15 in Eingriff mit der Werkstückkante 12 gebracht werden kann. In jedem Bereich dieser Arbeitsbreite ergeben sich geringfügig veränderte bzw. sich stufenlos verändernde wirksame Anstellwinkel der Arbeitsflächen 13, 14 bzw. der Arbeitskante 15, so daß die jeweils günstigsten Verhältnisse gewählt werden können. Auch ohne Absetzen der Arbeitsglieder 8, 9 von der Werkstückkante 12 kann das Arbeitsglied 9 in entsprechender Weise seitlich über die gesamte Arbeitsbreite seiner Arbeitsfläche 16 gegenüber der Werkstückkante 12 ohne wesentliche Beeinträchtigung seiner spurhaltenden Wirkung oder sogar über den Bund 25 hinaus lageverändert werden, wodurch sich ebenfalls die genannten Wirkungen ergeben.

Jeder der genannten Bauteile bzw. jede der Anordnungen kann bei einem Werkzeug jeweils nur ein einziges Mal oder mehrere Male vorgesehen sein, z.B. entweder um unterschiedliche Arbeitsköpfe in und außer Arbeitslage zu bringen und/oder um mehr als zwei Eingriffsbereiche vorzusehen. Die beschriebenen Eigenschaften können jeweils genau, im wesentlichen bzw. ungefähr oder wesentlich abweichend vorgesehen sein, um das Werkzeug an unterschiedliche Erfordernisse anzupassen.

Soll der Abstand zwischen den Arbeitsflächen 13 bis 15 und 16 verändert werden, so kann der Kopfteil 7 bzw. die Tragplatte 28 statt der einteiligen Ausbildung aus zwei gesonderten Bauteilen bestehen, die quer zur Arbeitsebene 10 unmittelbar benachbart zueinander liegen und einander in Vorschubrichtung 20 überlappen. Die beiden Bauteile sind dann über eine Schiebeführung etwa in Vorschubrichtung 20 mit einer Stellspindel oder dgl. gegeneinander verstellbar. Auch können die beiden Bauteile um eine zur Arbeitsebene 10 etwa parallele und zur Vorschubrichtung 20 bzw. zur dazu parallelen Mittelachse 2 querliegende Achse gegeneinander schwenkbar sein, so daß der Anstellwinkel der Anstellebene 19 gegenüber den Ebenen 10, 18 verändert werden kann. Der Tragteil 28 kann zur geringfügig rückfedernden Nachgiebigkeit des Arbeitsgliedes 8 bzw. 9 quer zur Arbeitsebene 10 als Federarm wirken.

Da der Kopfteil 7 über seine gesamte Breite und seitlich über mehr als die Höhe des Arbeitsgliedes 8, 9 bzw. der Arbeitsfläche 13 bis zu der der Arbeitsebene zugekehrten Innenseite des Tragteiles 28 zwischen der Arbeitsfläche 13 und dem Arbeitsglied 9 offen ist, können Späne sehr gut von der Arbeitsfläche aus seitlich ablaufen. Späne können auch entlang der Rundung der Querwand 29, der Innenseite des Tragteiles 28 und sogar über den vertieften Umfang des Arbeitsgliedes 9 entlang der Querwand 31 bzw. entlang der dem Arbeitsglied 8 zugekehrten Konvexseite des Arbeitsgliedes 9 gut ablaufen.

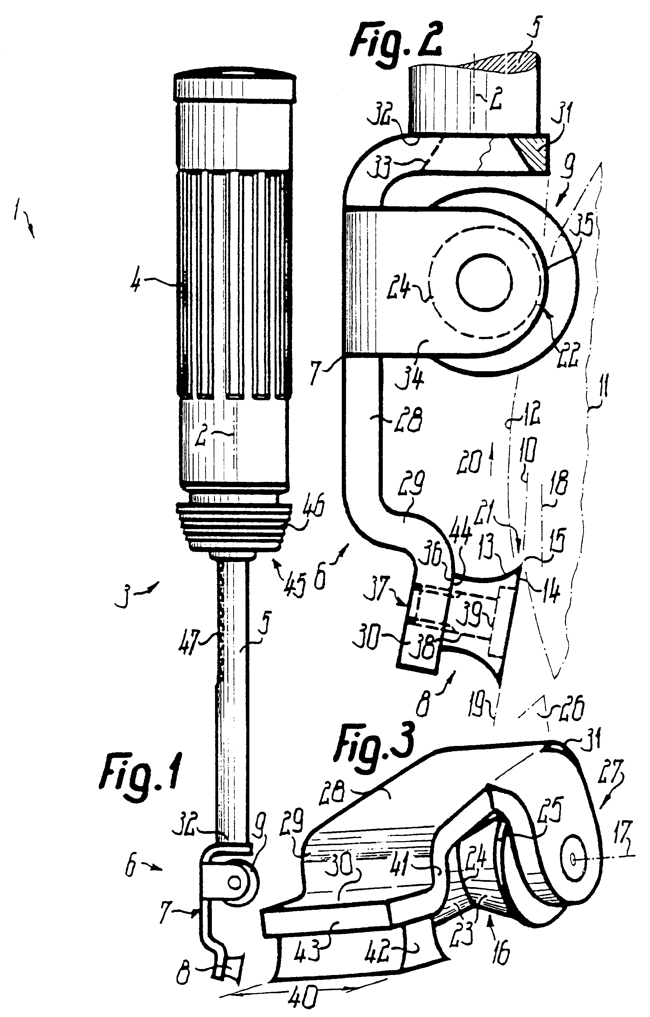

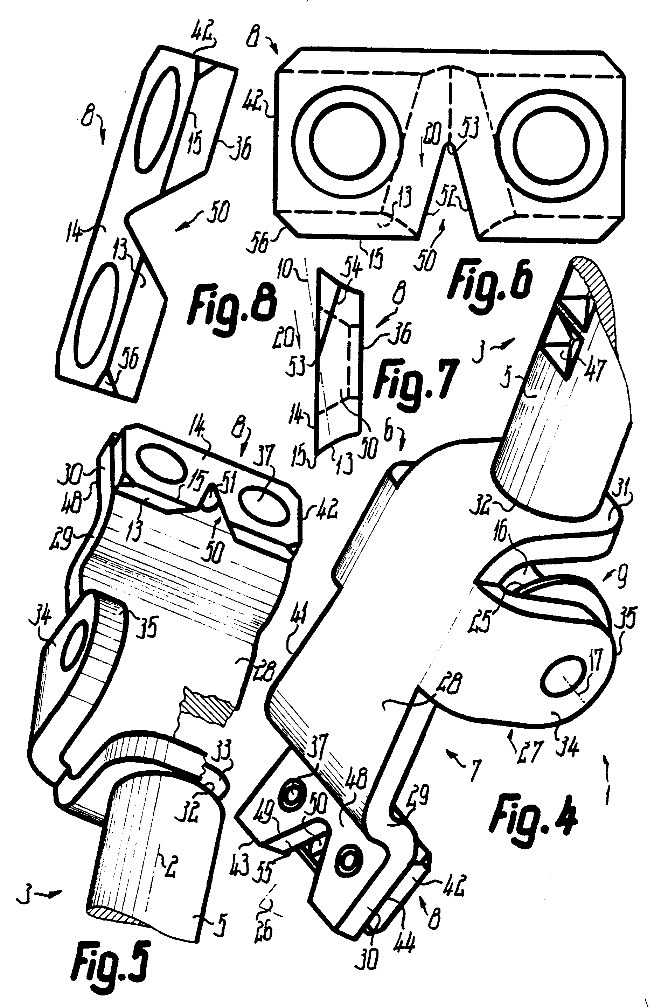

Bei der Ausbildung nach den Fig. 4 und 5 ist die Tragplatte 28 von der Abkröpfung 29 nach hinten bis zu den Tragschilden 34 durch spitzwinklige Konvergenz der Seitenkanten 41 in der Breite verjüngt, so daß der lichte Abstand zwischen den Lagerschilden 34 etwa gleich der Arbeitsbreite 40 des Arbeitsgliedes 8 und die Axialerstreckung des Arbeitsgliedes 9 demgegenüber kleiner sein kann, nämlich etwa um ein Sechstel. Das Arbeitsglied 9 kann aus verschiedenen Materialien, z.B. Metall, Kunststoff oder dgl. bestehen, wobei seine in Berührung mit dem Werkstück kommenden Oberflächen zweckmäßig gegenüber dem Werkstück eine geringere Härte haben können, um Kratzverletzungen an der Werkstückoberfläche zu vermeiden. Das Arbeitsglied 8 kann auch auf der von der Anlagefläche 44 abgekehrten Rückenfläche 48 des Tragteiles 30 mit denselben Mitteln 37 befestigt werden, um unterschiedliche Schneidwinkel beim Entgraten verschiedener Werkstoffe zu erhalten.

Gemäß den Fig. 4 bis 8 weisen das Arbeitsglied 8 und der Tragteil 30 jeweils einen mit Abstand zwischen den Seitenkanten 42 und annähernd symmetrisch zur Mittelebene 26 liegenden Ausschnit 50 bzw. 49 auf, welcher in Ansicht auf die Arbeitsfläche 14 spitzwinklig V-förmig ist, wobei der Flankenwinkel des Ausschnittes 49 größer als der des Ausschnittes 50 ist. Der V-förmige Ausschnitt 49 weist eine konkav ausgerundete Spitze auf, divergiert zur vorderen Querkante 43 und ist an dieser Querkante 43 im Bereich seiner größten Breite randoffen. Der V-förmige Ausschnitt 50 weist eine mit demgegenüber kleinerem Radius konkav ausgerundete Spitze auf, divergiert zur Arbeitsfläche 13 und ist an dieser Arbeitsfläche 13 im Bereich seiner größten Breite randoffen sowie über die gesamte Ausschnittiefe zur Fläche 36 verbreitert, so daß er an dieser Fläche 36 bis zu beiden Kantenflächen 13 reicht. Dieses Arbeitsglied ist wesentlich dünner als das gemäß den Figuren 1 bis 3, wobei seine Dicke nur etwa ein Viertel bis ein Fünftel der Erstreckung zwischen den Kantenflächen 13 und nur etwa ein Achtel der Erstreckung zwischen den Kantenflächen 42 entspricht. Im montierten Zustand überdecken die Ausschnitte 49, 50 einander mit ihren an ihre Bodenbereiche anschließenden Abschnitten so, daß von der Fläche 14 über die Flächen 36, 44 bis zur Fläche 48 ein quer zu diesen Flächen durchgehender, kanalförmiger Spandurchlaß 51 gebildet ist, welcher in Ansicht auf die genannten Flächen frei und über den gesamten Umfang begrenzt, z.B. rautenförmig, ist. Die Späne können daher an der Rückseite 48 des Tragteiles 30 austreten.

Die Flanken 52 wie auch der Bodenbereich 53 des Ausschnittes 50 bilden in der Ebene der Arbeitsfläche 14 bzw. der Arbeitskante 15 Schneidkanten, welche im Querschnitt etwa gleiche, spitze Flankenwinkel wie die Arbeitskante 15 dadurch haben, daß sie im Querschnitt auf der von der Arbeitsfläche 14 abgekehrten Seite von schrägen Flankenflächen 54 begrenzt sind, welche schräg zur Fläche 36 ansteigen bzw. in diesem Querschnitt stumpfwinklig zueinander geneigt sind, wie dies insbesondere in Fig. 8 erkennbar ist. Diese Flankenflächen gehen mit etwa konstanter Breite bis zur Arbeitsfläche 13 sowie der davon abgekehrten Kantenfläche und bis zur Fläche 36 kontinuierlich schräg durch. Die Flankenflächen 55 des Ausschnittes 49 dagegen liegen etwa rechtwinklig zu mindestens einer der Flächen 14, 36. Die schrägen Flankenflächen 54 bilden die Schneidenrückenflächen der Schneidkantenabschnitte 52, 53 und somit flach ansteigende Spanleitflächen, während die Flanken 55 steiler ansteigende Spanleitflächen bilden. Die größte Breite des Ausschnittes 50 im Bereich der Arbeitskante 15 ist wesentlich kleiner als deren Länge bzw. die Hälfte oder ein Viertel davon, wobei die Länge der restlichen Arbeitskante 15 etwa dem 4-fachen der größten Breite des Ausschnittes 50 entsprechen kann. Der Bodenbereich 53 liegt etwa in der Mitte zwischen den Kantenflächen 13 und zwischen den Öffnungen für die Befestigungsglieder 37. Die schräg an die Kanten 52, 53 anschließenden Flanken bilden zwischen dem Bereich 53 und der von der Öffnung 50 abgekehrten Kantenfläche 13 eine etwa V-förmige Nut, deren einzelne Flanken zwischen etwa 35° und 55°, insbesondere etwa 45° gegenüber den Plattenflächen 14, 36 geneigt sein können. Die Plattendicke des Arbeitsgliedes 8 kann etwa derjenigen der Bereiche 28 bis 31, 34 entsprechen. Alle beschriebenen Ausführungsformen können beliebig miteinander kombiniert werden, wobei jeder Bauteil bzw. jede Anordnung nur ein- oder mehrfach vorgesehen sein kann.

Die Arbeitsfläche 13 kann auch eben sein. Die seitlich außen an die Kantenflächen 42 anschließenden und jeweils von drei im annähernd rechten Winkel zueinander liegenden Kanten bzw. Flächen 13, 14, 42 gebildeten Eckbereiche der Arbeitskante 15 können durch Abflachungen 56 gebildet sein, welche in jede der genannten Flächen 13, 14, 42 hineinreichen. Auch dadurch können Beschädigungen am Werkstück vermieden sein, wobei statt Abflachungen 56 auch kugelkalottenförmige Abrundungen geeignet sind.

## Patentansprüche

1. Werkzeug (1) zur Materialbearbeitung an Werkstücken (11) in mindestens einem Bearbeitungsbereich (21, 22), insbesondere zum materialabtragenden manuellen Entgraten von Werkstückkanten (12), mit einem wenigstens einen Halter (4) für das Werkzeug (1) und mindestens einen Arbeitskopf (6) aufweisenden Grundkörper (3), sowie mit einem durch wenigstens zwei Stellen definierten Stützbereich, der mindestens eine bei der Materialbearbeitung in das Werkstück (11) in einer geführten Eingriffs- und Spurlage eingreifende Stütz- und Arbeitsfläche (13 - 15, 16) umfaßt, gekennzeichnet durch Mittel zur seitwärts gerichteten Querverlagerung der Arbeitsfläche (13 - 15, 16) gegenüber dem Werkstück (11) während der Materialbearbeitung und bei Aufrechterhaltung der Spurführung.

2. Werkzeug nach Anspruch 1, dadurch gekennzeichnet, daß es wenigstens zwei an mindestens einem Arbeitskopf (6) für den Eingriff in das Werkstück (11) vorgesehene und eine Stütz- bzw. Arbeitsebene (10) bestimmende Arbeitsflächen (13 - 15, 16) aufweist, von denen wenigstens eine als für den bearbeitenden Eingriff eine Arbeitszone (40) aufweisende Bearbeitungsfläche (13, 14, 16) ausgebildet ist und von denen insbesondere mindestens eine außerhalb einer Arbeitszone eine Stützfläche (14, 16) zur Abstützung des jeweiligen Arbeitskopfes (6) an dem Werkstück (11) während einer eine Vorschubrichtung (20) bestimmenden Vorschubbewegung wenigstens einer in einer Bearbeitungs-Eingriffslage stehenden Bearbeitungsfläche (13 - 15, 16) bildet, wobei vorzugsweise mindestens ein Arbeitskopf (6) in mehreren seitwärts quer zur Vorschubrichtung (20) gegeneinander versetzten und unmittelbar aneinander anschließenden Bearbeitungs-Eingriffslagen an dem Werkstück (11) ansetzbar ist, und/oder daß eine Stützfläche (14, 16) durch eine vertiefte Fläche mit in einem Flankenwinkel zueinander liegenden Flanken (52, 23) ausgebildet ist, daß insbesondere der Flankenwinkel größer als 90° bzw. 100° ist oder zwischen etwa 110° und 140° bzw. bei etwa 130° liegt, und daß vorzugsweise die Flanken (23, 52) etwa symmetrisch beiderseits einer zur Vorschubrichtung (20) parallelen Mittelebene (26) der Arbeitszone (40) des Arbeitsgliedes (8, 9) liegen.

3. Werkzeug nach Anspruch 1 oder 2, dadurch gekennzeichnet, daß zwischen zwei in Vorschubrichtung (20) im Abstand voneinander liegenden Stützflächen (14, 16) ein von Stützflächen freier Bereich vorgesehen ist, daß insbesondere der Abstand zwischen einer am nächsten bei einem spanabhebenden Eingriffsbereich (21) liegenden Stützfläche (16) und diesem Eingriffsbereich (21) größer als die Erstreckung mindestens eines Arbeitsgliedes (8, 9) in Vorschubrichtung (20), als die Arbeitsbreite (40) des spanabhebenden Arbeitsgliedes (8) bzw. als die Arbeitsbreite der Stützfläche (16) ist und daß vorzugsweise der Abstand zwischen der Stützfläche (16) und dem spanabhebenden Eingriffsbereich (21) zwischen mindestens 10 und höchstens 25 mm bzw. bei etwa 15 mm liegt, und/oder daß eine Stützfläche (16) und ein im Bearbeitungseingriff stehendes Arbeitsglied (8) gegeneinander in wenigstens einer Richtung bewegbar sind, daß insbesondere eine Stützfläche (16) zur Durchführung einer der Vorschubbewegung folgenden Laufbewegung gegenüber dem Grundkörper (3) bewegbar ist und daß vorzugsweise eine Stützfläche (16) seitwärts zwischen Anschlagstellungen selbstanpassend beweglich gelagert ist.

4. Werkzeug nach einem der vorhergehenden Ansprüche, dadurch gekennzeichnet, daß eine Stützfläche (14, 16) in mindestens einer Ebene wenigstens teilweise gekrümmt ist, daß insbesondere eine Stützfläche (14, 16) um eine zur Vorschubrichtung (20) querliegende Achse (17) konvex gekrümmt ist bzw. zur nur punkt- oder linienförmigen Anlage am Werkstück (11) ausgebildet ist, und daß vorzugsweise eine Stützfläche (14, 16) um eine zur Vorschubrichtung (20) etwa parallele Achse gekrümmt bzw. in Vorschubrichtung (20) gesehen etwa V-förmig bzw. höchstens so breit wie oder schmaler als die Arbeitsbreite eines im Abstand von ihr liegenden Arbeitsgliedes (8, 9) ist, und/oder daß mindestens eine Arbeitsfläche (16) durch wenigstens einen mit einer Lagerung (27) am Grundkörper (3) bewegbar gelagerten Arbeitskörper (9) gebildet ist, daß insbesondere ein Arbeitskörper (9) rollenförmig drehbar bzw. etwa parallel zur Arbeitszone (40) einer Arbeitsfläche (13 - 15, 16) hin- und hergehend verschiebbar gelagert ist und daß vorzugsweise der Durchmesser des Arbeitskörpers (9) höchstens so groß wie sein mittlerer bzw. sein lichter Abstand von einer benachbarten Arbeitsfläche (13 - 15) ist.

5. Werkzeug nach einem der vorhergehenden Ansprüche, dadurch gekennzeichnet, daß wenigstens ein eine Arbeitsfläche (16) bildendes Arbeitsglied (9) um eine quer zur Vorschubrichtung (20) bzw. etwa parallel zu einer Längserstreckung einer Arbeitszone (40) einer Arbeitsfläche (13 - 15, 16) liegende Achse (17) frei drehbar gelagert ist, daß insbesondere eine Arbeitsglied (9) zwischen seitlichen Tragschildern (34) des Grundkörpers (3) angeordnet bzw. seine Mittelachse (17) gegenüber mindestens einem Tragschild (34) exzentrisch vorgesehen ist und daß vorzugsweise ein Arbeitsglied (9) im wesentlichen nur über mindestens ein plattenförmiges Verbindungsteil (28, 30) des Grundkörpers (3) mit einer Aufnahme (44) für ein weiteres Arbeitsglied (8) verbunden ist, und/oder daß mindestens ein Verbindungsteil (28, 30) zur Verbindung einer Aufnahme (34) für ein Arbeitsglied (9) mit einer weiteren Aufnahme (44) für ein weiteres Arbeitsglied (8) einteilig mit mindestens einer der Aufnahmen (34, 44) ausgebildet ist, daß insbesondere ein Verbindungsteil (28, 30) bzw. wenigstens eine Aufnahme (34, 44) aus einem flächigen Ausgangsmaterial, wie Blech, besteht und daß vorzugsweise ein frei ausragender Verbindungsteil (28, 30) im Bereich einer spanabhebenden Arbeitsfläche (13 - 15) näher bei der Arbeitsebene (10) als im Bereich einer im Abstand davon liegenden weiteren Arbeitsfläche (16) bzw. im jeweiligen Bereich wenigstens teilweise in einer zur Arbeitsebene (10) etwa parallelen Ebene liegt.

6. Werkzeug nach einem der vorhergehenden Ansprüche, dadurch gekennzeichnet, daß mindestens eine Arbeitsfläche (13 - 15, 16) eine linienförmig kontinuierlich durchgehende bzw. im wesentlichen geradlinige Arbeitskante (15) bildet, daß insbesondere eine Arbeitsfläche eine im wesentlichen ebene Schneidenrückenfläche (14) bzw. eine Arbeitsfläche eine Schneidenbrustfläche (13, 54) mit einer einspringenden Spanführung bildet und daß vorzugsweise wenigstens eine Arbeitsfläche (13 -15, 16) eine Arbeitsbreite (40) von mindestens 5 bis 10 mm bzw. etwa 12 mm hat, und/oder daß mindestens eine Arbeitsfläche (13 - 15, 16) durch wenigstens ein vom Grundkörper (3) gesondertes Arbeitsglied (8, 9) gebildet ist, daß insbesondere ein Arbeitsglied (8) durch eine Platte gebildet ist und daß vorzugsweise ein Arbeitsglied (8) seitwärts quer zur Vorschubrichtung (20) eine größere Erstreckung als in Vorschubrichtung (20) bzw. quer zur Arbeitsebene (10) hat.

7. Werkzeug nach einem der vorhergehenden Ansprüche, dadurch gekennzeichnet, daß mindestens ein eine Arbeitsfläche (13 - 15) bildendes Arbeitsglied (8) im wesentlichen nur auf einer von der Arbeitsebene (10) abgekehrten Seite (36) an dem Grundkörper (3) abgestützt ist, daß insbesondere ein Arbeitsglied (8) mit mindestens einem Zugglied (37), wie einem Bolzen mit versenktem Bolzenkopf (39), an dem Grundkörper (3) befestigt ist und daß vorzugsweise wenigstens eine Arbeitsfläche (13 - 15, 16) seitlich an mindestens einer Seite im wesentlichen bis an die zugehörige seitliche Begrenzungsebene (41) des Grundkörpers (3) bzw. mit einer quer zur Vorschubrichtung (20) liegenden Außenfläche annähernd bis an ein freies Ende (43) des Grundkörpers (3) reicht, und/oder daß mindestens ein eine Arbeitsfläche (13 - 15, 16) bildendes Arbeitsglied (8, 9) als Wendeglied mit wahlweise den Eingriffsbereich (21, 22) bildenden gesonderten Arbeitsflächen ausgebildet bzw. in wenigstens einer Richtung im wesentlichen stufenlos verstellbar an dem Grundkörper (3) befestigt ist, daß insbesondere zwei Arbeitskanten (15) eine gemeinsame bzw. ebene Arbeitsfläche (14) aufweisen und daß vorzugsweise ein Arbeitsglied (8) im Querschnitt parallel zur Vorschubrichtung (20) annähernd trapezförmig bzw. im wesentlichen vollflächig mit einer Spannfläche (36) befestigt ist, welche annähernd über die gesamte Arbeitsbreite (40) des Arbeitsgliedes (8, 9) reicht bzw. in Vorschubrichtung (20) eine kleinere Erstreckung als quer dazu hat.

8. Werkzeug nach einem der vorhergehenden Ansprüche, dadurch gekennzeichnet, daß eine Anlagefläche (36) eines eine Arbeits-Rückenfläche (14) bildenden Arbeitsgliedes (8) wenigstens teilweise zwischen den zur Arbeitsebene (10) parallelen Begrenzungsebenen eines eine Stützfläche (16) bildenden Arbeitsgliedes (9) liegt bzw. die Arbeits-Rückenfläche (14) zur Längs-Mittelachse (2) des Werkzeuges (1) gegenüber der zu dieser Mittelachse (2) parallelen Abstützebene (18) der Stützfläche (16) zurückversetzt ist, daß insbesondere eine Arbeits-Rückenfläche (14) mit der zugehörigen Arbeitsebene (10) bzw. Abstützebene (18) einen sich zur Stützfläche (16) schließenden spitzen Winkel bildet und daß vorzugsweise eine Arbeitsfläche (13 - 15) an einem zur Arbeitsebene (10) abgesetzten bzw. gegenüber einer weiteren Arbeitsfläche (16) geringfügig federnd auslenkbaren Endabschnitt (30) eines Verbindungsteiles (28 - 31) vorgesehen ist, und/oder daß eine Stützfläche (14, 16) als Arbeitsfläche, wie als spanlos arbeitende Glättungsfläche, ausgebildet ist, daß insbesondere mindestens zwei Arbeitsflächen (13 - 15, 16) in Vorschubrichtung (20) hintereinander vorgesehen sind und daß vorzugsweise eine Stützfläche (16) bzw. ein Stützkörper (9) im wesentlichen in einem Gehäuse angeordnet bzw. in Vorschubrichtung (20) auf mindestens einer Seite mit einer Querwand (29, 31) des Grundkörpers (3) abgeschirmt ist.

9. Werkzeug nach einem der vorhergehenden Ansprüche, dadurch gekennzeichnet, daß mindestens zwei Arbeitsflächen (13 - 15, 16) gegeneinander in Vorschubrichtung (20) bzw. quer zur Arbeitsebene (10) im wesentlichen stufenlos verstellbar und in der jeweiligen Einstellung festsetzbar sind, daß insbesondere der Grundkörper (3) im Bereich des Arbeitskopfes (6) in zwei mit einer Stelleinrichtung gegeneinander verstellbare und jeweils eine der Arbeitsflächen (13 - 15, 16) tragende Kopfteile geteilt ist und daß vorzugsweise die beiden Kopfteile über eine Schiebeführung bzw. einen Gelenkbereich miteinander verbunden sind, und/oder daß mindestens ein Arbeitskopf (6) an einem Ende und ein Handgriff (4) am anderen Ende eines stabförmigen Schaftes (5) des Grundkörpers (3) angeordnet sind, daß insbesondere das zugehörige Ende (32, 33) des Schaftes (5) gegenüber mindestens einer Arbeitsfläche (13 - 15, 16) in Längsrichtung des Schaftes (5) zurückversetzt ist und daß vorzugsweise der, mindestens eine der Arbeitsflächen (13 - 15, 16) tragende Kopfteile (7) des Grundkörpers (3) als gesonderter Bauteil mit einer an einem Ende vorgesehenen Querwand (31) am zugehörigen Ende (32, 33) des Schaftes (5) befestigt ist.

10. Werkzeug nach einem der vorhergehenden Ansprüche, dadurch gekennzeichnet, daß ein Halter (4) gegenüber mindestens einer Arbeitsfläche (13 - 15, 16) etwa parallel zur Vorschubrichtung (20) verstellbar und in der jeweiligen Einstellung festsetzbar ist, daß insbesondere der Halter (4) gegenüber dem zugehörigen Ende des Schaftes (5) verstellbar bzw. der Kopfteil (7) gegenüber dem Schaft (5) unverstellbar bzw. an diesem mit einem Nietkopf (33) befestigt ist und daß vorzugsweise eine Entriegelungs-Handhabe (46) zur Entriegelung eines Halters (4) gegenüber mindestens einer Arbeitsfläche (13 - 15, 16) im Bereich des Halters (4) liegt.

11. Werkzeug nach einem der vorhergehenden Ansprüche, dadurch gekennzeichnet, daß im Bereich einer Arbeitszone (40) wenigstens ein seitlich flankierter Spandurchlaß (51) quer zur Arbeitsebene (10) vorgesehen ist, daß insbesondere ein Spandurchlaß (51) von einer Arbeitsfläche (13 - 15) bis zu mindestens einer davon abgekehrten Fläche (36, 48) durchgeht und daß vorzugsweise ein Spandurchlaß (51) durch zwei Öffnungen bzw. entgegengesetzt randoffene Ausschnitte (49, 50) in zwei aufeinanderliegenden Bauteilen (8, 30) gebildet ist und/oder daß mindestens zwei im Winkel aneinander schließende Arbeitskanten (15, 52, 53) vorgesehen sind, daß insbesondere an der von einer Arbeitsfläche (14) abgekehrten Seite (36) eines Arbeitsgliedes (8) mindestens eine vertiefte bzw. schräg ansteigende Spanführung (54) vorgesehen ist und daß vorzugsweise ein Spandurchlaß (51) einen ersten, sich verengenden Längsabschnitt (54) sowie daran anschließend einen zweiten, sich erweiternden Längsabschnitt (55) aufweist.

## Claims

1. Tool (1) for material machining on workpieces (11) in at least one machining area (21, 22), particularly for material-removing, manual deburring of workpiece edges (12), with a body (3) having at least one holder (4) for the tool (1) and at least one working head (6), as well as with a supporting area defined by at least two points, which comprises at least one supporting and working surface (13-15, 16) engaging in a guided engagement and track position in the workpiece (11) during material machining, characterized by means for the laterally directed transverse displacement of the working surface (13-15, 16) with respect to the workpiece (11) during material machining and maintaining track guidance.

2. Tool according to claim 1, characterized in that it has at least two working surfaces (13-15, 16) determining a supporting or working plane (10) provided on at least one working head (6) for the engagement in the workpiece (11) and whereof at least one is constructed as a machining surface (13, 14, 16) having a working zone (40) for machining engagement and whereof in particular at least one, outside a working zone, forms a supporting surface (14, 16) for supporting the particular working head (6) on the workpiece (11) during an advance movement determining an advance direction (20) of at least one machining surface (13-15, 16) in a machining-engagement position, in which preferably at least one working head (6) can be applied to the workpiece (11) in several directly following machining-engagement positions, which are mutually displaced sideways transversely to the advance direction (20) and/or that a supporting surface (14, 16) is formed by a recessed face with flanks (52,53) at a flank angle to one another, that in particular the flank angle is larger than 90 or 100° or is between approximately 110° and 140° or approximately 130° and that preferably the flanks (23, 52) are roughly symmetrical on either side of a median plane (26) of the working zone (40) of the working member (8, 9) parallel to the advance direction (20).

3. Tool according to claim 1 or 2, characterized in that between two spaced supporting surfaces (14, 16) in the advance direction (20) is provided an area free from said supporting surfaces, that in particular the spacing between a supporting surface (16) closest to a cutting engagement area (21) and said engagement area (21) is larger than the extension of at least one working member (8, 9) in the advance direction (20), than the working width (40) of the cutting working member (8) and/or the working width of the supporting surface (16) and that preferably the spacing between the supporting surface (16) and the cutting engagement area (21) is between at least 10 and at the most 25 mm or at approximately 15 mm and/or that a supporting surface (16) and a working member (8) in machining engagement are movable against one another in at least one direction, that in particular a supporting surface (16) is movable with respect to the body (3) for performing a running movement following the advance movement and that preferably a supporting surface (16) is mounted movable in self-adapting manner sideways between stop positions.

4. Tool according to any one of the preceding claims, characterized in that a supporting surface (14, 16) is at least partly curved in at least one plane, that in particular one supporting surface (14, 16) is convexly curved about an axis (17) transverse to the advance direction (20) or constructed for an only punctiform or linear engagement on the workpiece (11) and that preferably a supporting surface (14, 16) is curved about an axis roughly parallel to the advance direction (20) and/or considered in the advance direction (20) is roughly V-shaped or at the most as wide or narrower than the working width of a working member (8, 9) spaced therefrom and/or that at least one working face (16) is formed by at least one working body (9) mounted in movable manner with a bearing (27) on the body (3), that in particular one working body (9) is rotatable in roll-like manner and/or is displaceably mounted in backwards and forwards manner parallel to the working zone (40) of a working face (13-15, 16) and that preferably the diameter of the working body (9) is at the most as large as its central or internal spacing from an adjacent working face (13-15).

5. Tool according to any one of the preceding claims, characterized in that at least one working member (9) forming a working face (16) is mounted so as to be freely rotatable about an axis (17) transverse to the advance direction (20) and/or roughly parallel to a longitudinal extension of a working zone (40) of a working face (13-15, 16), that in particular a working member (9) is located between lateral bearing brackets (34) of the body (3) and/or its central axis (17) is eccentric to at least one bearing bracket (34) and that preferably a working member (9) is connected substantially by only at least one plate-like connecting part (28, 30) of the body (3) to a receptacle (44) for a further working member (8) and/or that at least one connecting part (28, 30) is constructed for connecting a receptacle (34) for a working member (9) to a further receptacle (44) for a further working member (8) integrally with at least one of the receptacles (34, 44), that in particular a connecting part (28, 30) or at least one receptacle (34, 44) is made from a flat starting material, such as sheet metal and that preferably a freely projecting connecting part (28, 30) in the vicinity of a cutting working face (13-15) is closer to the working plane (10) than in the vicinity of a further working face (16) spaced therefrom and/or in the particular area is at least partly located in a plane roughly parallel to the working plane (10).

6. Tool according to any one of the preceding claims, characterized in that at least one working face (13-15, 16) forms a linear, continuous and/or substantially linear working edge (15), that in particular a working face forms a substantially planar cutting edge back face (14) or a working face forms a cutting edge front face (13,54) with a reentrant chip guide and that preferably at least one working face (13-15, 16) has a working width (40) of at least 5 to 10 or approximately 12 mm and/or that at least one working face (13-15, 16) is formed by at least one working member (8, 9) separate from the body (3), that in particular a working member (8) is formed by a plate and that preferably a working member (8) sideways transverse to the advance direction (20) has a greater extension than in the advance direction (20) and/or at right angles to the working plane (10).

7. Tool according to any one of the preceding claims, characterized in that at least one working member (8) forming a working face (13-15) is essentially only supported on the body (3) on a side (36) remote from the working plane (10), that in particular a working member (8) is fixed to the body (3) by at least one tension member (37), such as a bolt with a countersunk head (39) and that preferably at least one working face (13-15, 16) laterally on at least one side extends up to the associated lateral boundary plane (41) of the body (3) and with an outer face located transversely to the advance direction (20) approximately up to a free end (43) of the body (3) and/or that at least one working member (8, 9) forming a working face (13-15, 16) is constructed as a turning member with separate working faces selectively forming the engagement area (21, 22) and/or is fixed in at least one direction in substantially steplessly adjustable manner to the body (3), that in particular two working edges (15) have a common or planar working face (14) and that preferably a working member (8), in cross-section, is approximately trapezoidal parallel to the advance direction (20) and/or is fixed in substantially whole-surface manner to a fixing face (36), which extends approximately over the entire working width (40) of the working member (8, 9) or in the advance direction (20) has a smaller extension than at right angles thereto.

8. Tool according to any one of the preceding claims, characterized in that a contact face (36) of a working member (8) forming a working back face (14) is at least partly located between the boundary planes, parallel to the working plane (10), of a working member (9) forming a supporting surface (16) and/or the working back face (14) is set back with respect to the median longitudinal axis (2) of the tool (1) relative to the supporting plane (18) of the supporting surface (16) parallel to said axis (2), that in particular a working back face (14) forms with the associated working plane (10) or supporting plane (18) an acute angle close to the supporting surface (16) and that preferably a working face (13-15) is provided on a slightly resiliently deflectable end portion (30) of a connecting part (28-31) offset with respect to the working plane (10) or with respect to a further working face (16) and/or that a supporting surface (14,16) is constructed as a working face, such as a non-cutting smoothing face, that in particular at least two working faces (13-15, 16) are successively provided in the advance direction (20) and that preferably a supporting surface (16) or a supporting body (9) is essentially located in a casing and/or is shielded in the advance direction (20) on at least one side with a partition (29, 31) of the body (3).

9. Tool according to any one of the preceding claims, characterized in that at least two working faces (13-15, 16) are substantially steplessly adjustable against one another in the advance direction (20) and/or at right angles to the working plane (10) and can be fixed in the particular setting, that in particular the body (3) is subdivided in the vicinity of the working head (6) into two head parts, in each case carrying one of the working faces (13-15, 16), adjustable with respect to one another by an adjusting device and that preferably the two head parts are interconnected by means of a sliding guide and/or a joint area and/or that at least one working head (6) is located on one end and a handle (4) on the other end of a rod-like shaft (5) of the body (3), that in particular the associated end (32, 33) of the shaft (5) is set back with respect to at least one working face (13-15, 16) in the longitudinal direction of the shaft (5) and that preferably the head parts (7) of the body (3) carrying at least one of the working faces (13-15, 16) is fixed as a separate component with a partition (31) provided at one end to the associated end (32, 33) of the shaft (5).

10. Tool according to any one of the preceding claims, characterized in that a holder (4) is adjustable approximately parallel to the advance direction (20) with respect to at least one working face (13-15, 16) and can be fixed in the particular setting, that in particular the holder (4) is adjustable relative to the associated end of the shaft (5) and/or the head part (7) is non-adjustable relative to the shaft (5) or is fixed thereto by a rivet head (33) and that preferably an unlocking handle (46) for unlocking a holder (4) with respect to at least one working face (13-15, 16) is positioned in the vicinity of the holder (4).

11. Tool according to one of the preceding claims, characterized in that in the vicinity of a working zone (40) is provided transversely to the working plane (10) at least one laterally flanked chip passage (51), that in particular a chip passage (51) passes from a working surface (13-15) to at least one surface (36, 48) remote therefrom and that preferably a chip passage (51) is formed by two openings or opposing edge-opening cutouts (49, 50) in two components (8, 30) resting on one another and/or that at least two working edges (15, 52, 53) connected to one another at an angle are provided, that in particular on the side (36) of a working member (8) remote from a working surface (14) is provided at least one recessed or upwardly sloping chip guide (54) and that preferably a chip passage (51) has a first, narrowing longitudinal portion (54) and a second, widening longitudinal portion (55) connected thereto.

## Revendications

1. Outil (1) pour l'usinage des matériaux sur des pièces d'oeuvre (11) dans au moins un domaine d'usinage (21, 22), spécialement pour l'ébavurage manuel avec une action d'enlèvement de matériaux, des arêtes de pièce (12), avec un corps de base (3) présentant au moins un support (4) pour l'outil (1) et au moins une unité d'usinage (6), ainsi qu'avec un domaine d'appui défini au moins par deux points, lequel comprend une surface d'appui et de travail (13 - 15, 16) s'engageant dans la pièce (11) pendant l'usinage dans une position d'engagement et de tenue de trajectoire guidée, caractérisée par des moyens de déplacement transversal orienté latéralement, de la surface de travail (13 - 15, 16) par rapport à la pièce (11) pendant l'usinage et en maintenant la stabilité de trajectoire.

2. Outil d'après la revendication 1, caractérisé en ce qu'il présente au moins deux surfaces de travail (13 - 15, 16) prévues sur au moins une unité d'usinage (6) pour l'engagement dans la pièce (11) et déterminant un plan d'appui ou encore de travail (10), dont au moins une est réalisée en tant que surface d'usinage (13, 14, 16) présentant une zone de travail (40) pour l'engagement à action d'usinage et dont notamment au moins une de ces surfaces forme en dehors de la zone de travail une surface d'appui (14, 16) pour le support de la respective unité d'usinage (6) auprès de la pièce (11) pendant un mouvement d'avance, définissant une direction d'avancement (20), au moins d'une surface d'usinage (13 - 15, 16) se trouvant dans une position d'usinage et d'engagement, où de préférence au moins une unité d'usinage (6) est à placer par rapport à la pièce (11) dans plusieurs positions d'engagement pour l'usinage décalées l'une par rapport à l'autre latéralement et transversalement par rapport à la direction d'avance (20) et directement consécutives, et/ou en ce qu'une surface d'appui (14, 16) est réalisée par une surface renfoncée avec des flancs (52, 23) situés dans un angle de flanc l'un par rapport à l'autre, en ce que notamment l'angle de flanc est plus grand que 90° ou encore plus que 100° ou qu'il se trouve approximativement entre 110° et 140° ou encore approximativement prés de 130°, et en ce que de préférence les flancs (23, 52) se trouvent approximativement de manière symétrique des deux côtés d'un plan médian (26) parallèle par rapport à la direction d'avance (20), de la zone d'usinage (40) de l'élément de travail (8, 9).

3. Outil d'après la revendication 1 ou 2, caractérisé en ce qu'entre deux surfaces d'appui (14, 16) situées avec un écart l'une de l'autre en direction d'avance (20) est prévu un domaine sans surfaces d'appui, en ce que notamment l'écart entre une surface d'appui (16) située au plus près d'un domaine d'engagement (21) à enlèvement de copeaux et ce domaine d'engagement (21) est plus grand que l'étendue d'au moins un élément de travail (8, 9) en direction d'avance (20), que la largeur de travail (40) de l'élément de travail (8) enlèvant des copeaux ou encore que la largeur de travail de la surface d'appui (16) et en ce que de préférence l'écart entre la surface d'appui (16) et le domaine d'engagement (21) à enlèvement de copeaux se trouve entre au moins 10 et au plus 25 mm ou encore approximativement auprès de 15 mm, et/ou en ce qu'une surface d'appui (16) et un élément de travail (8) se trouvant en prise d'usinage sont mobiles l'un par rapport à l'autre dans au moins une direction, en ce que notamment une surface d'appui (16) est mobile pour la réalisation d'un mouvement de course suivant le mouvement d'avance par rapport au corps de base (3) et en ce que de préférence une surface d'appui (16) est logée de côté entre des positions d'arrêt de manière mobile et autoadaptative.

4. Outil d'après une des revendications précédentes, caractérisé en ce qu'une surface d'appui (14, 16) est au moins partiellement courbée dans au moins un plan, en ce que notamment une surface d'appui (14, 16) est courbée de manière convexe autour d'un axe (17) transversal par rapport à la direction d'avance (20) ou encore qu'elle est réalisée pour une disposition ponctuelle ou linéaire à la pièce (11), et en ce que de préférence une surface d'appui (14, 16) est courbée autour d'un axe plus ou moins parallèle par rapport à la direction d'avance (20) ou encore que, vu en direction d'avance (20), elle est plus ou moins en forme de V ou encore qu'elle présente une largeur telle que ou plus petite que la largeur de travail d'un élément de travail (8, 9) écartée de celle-ci, et/ou en ce qu'au moins une surface de travail (16) est formée par au moins un corps de travail (9) logé de manière mobile au corps de base (3) par un logement (27), en ce que notamment un corps de travail (9) est logé de manière rotative en forme de rouleau ou encore de manière approximativement parallèle à la zone de travail (40) d'une surface de travail (13 - 15, 16) de manière à pouvoir être déplacé de façon coulissante et en ce que de préférence le diamètre du corps de travail (9) est au plus aussi grand que son écart moyen ou encore l'écart intermédiaire d'une surface de travail (13 - 15) limitrophe.

5. Outil d'après une des revendications précédentes, caractérisé en ce qu'au moins un élément de travail (9) formant une surface de travail (16) est logé de manière librement rotative autour d'un axe (17) transversal par rapport à la direction d'avance (20) ou encore approximativement parallèle à un'étendue longitudinale d'une zone de travail (40) d'une surface de travail (13 - 15, 16), en ce que notamment un élément de travail (9) est disposé entre des boucliers de support (34) latéraux du corps de base (3) ou encore que sa ligne médiane (17) est prévue de manière excentrique par rapport à un bouclier de support (34) au moins et en ce que de préférence un élément de travail (9) est joint en substance seulement par au moins un élément de raccordement (28, 30) du corps de base (3) en forme de plaque à un logement (44) en raison d'un autre élément de travail (8), et/ou en ce qu'au moins un élément de raccordement (28, 30) est réalisé en une seule pièce avec au moins un des logements (34, 44) pour la jonction d'un logement (34) pour un élément de travail (9) avec un autre logement (44) pour un autre élément de travail (8), en ce que notamment un élément de raccordement (28, 30) ou encore au moins un logement (34, 44) est constitué d'une matière de départ plate, telle que de la tôle et en ce que de préférence un élément de raccordement (28, 30) saillant librement est situé plus près du plan de travail (10) dans le domaine d'une surface de travail (13 - 15) à enlèvement de copeaux que dans le domaine d'une autre surface de travail (16) disposée avec un écart de ceci ou encore qu'il est situé dans le domaine respectif au moins partiellement dans un plan approximativement parallèle au plan de travail (10).

6. Outil d'après une des revendications précédentes, caractérisé en ce qu'au moins une surface de travail (13 - 15, 16) forme une arête d'usinage (15) qui s'étend de bout en bout de manière continue en forme de ligne ou encore essentiellement rectiligne, en ce que notamment une surface de travail forme une surface dorsale de coupe (14) essentiellement plane ou encore qu'une surface de travail forme une surface frontale de coupe (13, 54) avec un guide-copeaux rentrant et en ce que de préférence au moins une surface de travail (13 - 15, 16) présente une largeur de travail (40) d'au moins 5 à 10 mm ou encore approximativement de 12 mm, et/ou en ce qu'au moins une surface de travail (13 - 15, 16) est formée par au moins un élément de travail (8, 9) distinct du corps de base (3), en ce que notamment un élément de travail (8) est formé par une plaque et en ce que de préférence un élément de travail (8) présente latéralement, transversalement par rapport à la direction d'avance (20) une étendue plus grande qu'en direction d'avance (20) ou encore que transversalement par rapport au plan de travail (10).

7. Outil d'après une des revendications précédentes, caractérisé en ce qu'au moins un élément de travail (8) formant une surface de travail (13 - 15) est supporté par le corps de base (3) en substance seulement par une face (36) détournée du plan de travail (10), en ce que notamment un élément de travail (8) est fixé sur le corps de base (3) avec au moins un membre tendu (37) tel qu'un boulon avec une tête de boulon noyée et en ce que de préférence au moins une surface de travail (13 - 15, 16) s'étend avec au moins un côté latéralement en substance jusqu'au plan de délimitation (41) latéral correspondant du corps de base (3) ou encore qu'elle s'étend avec une surface extérieure située transversalement par rapport à la direction d'avance (20) approximativement jusqu'à une extrémité (43) libre du corps de base (3), et/ou en ce qu'au moins un élément de travail (8, 9) formant une surface de travail (13 - 15, 16) est réalisé entant qu'élément réversible avec des surfaces de travail formant le domaine d'engagement (21, 22) distinctes au choix ou encore qu'il est fixé dans au moins une direction sur le corps de base (3) de manière essentiellement réglable sans à-coups, en ce que notamment deux arêtes de travail (15) présentent une surface de travail (14) commune ou encore plane et en ce que de préférence un élément de travail (8) est fixé en section transversale parallèlement à la direction d'avance (20) approximativement en forme de trapèze ou encore essentiellement sur toute la surface avec une surface de serrage (36), laquelle s'étend approximativement sur toute la largeur de travail (40) de l'élément de travail (8, 9) ou encore qui présente en direction d'avance (20) une étendue plus petite qu'en direction transversale par rapport à ceci.

8. Outil d'après une des revendications précédentes, caractérisé en ce qu'une surface de logement (36) d'un élément de travail (8) formant une surface de dorsale de travail (14) se trouve au moins partiellement entre les plans de délimitation, parallèles au plan de travail (10), d'un élément de travail (9) formant une surface d'appui (16) ou encore que la surface dorsale de travail (14) est décalée en arrière vers la ligne médiane longitudinale (2) de l'outil (1) par rapport au plan d'appui (18), parallèle à cette ligne médiane (2), de la surface d'appui (16), en ce que notamment une surface dorsale de travail (14) forme un angle aigu se refermant en direction de la surface d'appui (16) avec le plan de travail (10) ou encore avec le plan d'appui (18) correspondant et en ce que de préférence une surface de travail (13 - 15) est prévue à une section terminale (30) d'un élément de raccordement (28 - 31) décalée par rapport au plan de travail (10) ou encore pouvant être légèrement déviée élastiquement par rapport à une autre surface de travail (16), et/ou en ce qu'une surface d'appui (14, 16) est réalisée en tant que surface de travail, tel qu'une surface de lissage travaillant sans enlèvement de copeaux, en ce que notamment au moins deux surfaces de travail (13 - 15, 16) sont prévues l'une derrière l'autre en direction d'avance (20) et en ce que de préférence une surface d'appui (16) ou encore un corps d'appui (9) est disposée essentiellement dans un boîtier ou encore qu'elle est écrannée en direction d'avance (20) au moins sur un côté par une paroi transversale (29, 31) du corps de base (3).

9. Outil d'après une des revendications précédentes, caractérisé en ce qu'au moins deux surfaces de travail (13 - 15, 16) sont ajustables essentiellement sans à-coups l'une par rapport à l'autre en direction d'avance (20) ou encore transversalement par rapport au plan de travail (10) et qu'elles peuvent être fixées dans le positionnement respectif, en ce que notamment le corps de base (3) est subdivisé dans le domaine de l'unité d'usinage (6) en deux éléments-tête réglables l'un par rapport à l'autre par un moyen de réglage et supportant respectivement une des surfaces de travail (13 - 15, 16) et en ce que de préférence les deux éléments-tête sont raccordés l'un avec l'autre au moyen d'un guidage coulissant ou encore par un domaine d'articulation, et/ou en ce qu'au moins un'unité d'usinage (6) est disposée à une extrémité et une manette (4) est disposée à l'autre extrémité d'une tige (5) du corps de base (3) en forme de barreau, en ce que notamment l'extrémité (32, 33) correspondante de la tige (5) est décalée en direction longitudinale de la tige (5) par rapport au moins à une surface de travail (13 - 15, 16) et en ce que de préférence l'élément-tête (7) du corps de base (3), élément portant au moins une des surfaces de travail (13 - 15, 16) est fixé en tant qu'élément constructif distinct par une paroi transversale (31) prévue à une extrémité, à l'extrémité (32, 33) correspondante de la tige (5).

10. Outil d'après une des revendications précédentes, caractérisé en ce qu'un support (4) est ajustable environ parallèlement à la direction d'avance (20) par rapport au moins à une surface de travail (13 - 15, 16) et qu'il peut être fixé dans le respectif positionnement, en ce que notamment le support (4) est ajustable par rapport à l'extrémité correspondante de la tige (5) ou encore que l'élément-tête (7) est indéréglable par rapport à la tige (5) ou encore qu'il est fixé sur celle-ci au moyen d'une tête de rivet (33) et en ce que de préférence une manette de déverrouillage (46) pour le déverrouillage d'un support (4) par rapport au moins à une surface de travail (13 - 15, 16) se trouve dans le domaine du support (4).

11. Outil d'après une des revendications précédentes, caractérisé en ce que dans le domaine d'une zone de travail (40) est prévu transversalement par rapport au plan de travail (10) au moins un passage d'évacuation des copeaux (51) flanqué latéralement, en ce que notamment un passage d'évacuation des copeaux (51) s'étend de bout en bout d'une surface de travail (13 - 15) jusqu'au moins à une surface (36, 48) à l'opposé de ceci et en ce que de préférence un passage d'évacuation des copeaux (51) est formé par deux ouvertures ou encore par des entailles (49, 50) ouvertes au bord de manière opposée dans deux éléments de construction (8, 30) superposés et/ou en ce qu'au moins deux arêtes de travail (15, 52, 53) sont prévues de manière contigué l'une à l'autre en forme d'angle, en ce que notamment sur le côté (36) d'un élément de travail (8), côté à l'opposé de la surface de travail (14) est prévu au moins un guidage des copeaux (54) approfondi ou encore montant de façon oblique et en ce que de préférence un passage d'évacuation des copeaux (51) présente une première section longitudinale (54) qui se resserre ainsi que de suite une deuxième section longitudinale (55) qui s'élargie.
